Europäisches Patentamt

European Patent Office

Office européen des brevets

(19)

(11) Veröffentlichungsnummer: **0 078 046**
**B1**

(12) **EUROPÄISCHE PATENTSCHRIFT**

(45) Veröffentlichungstag der Patentschrift:
**19.09.84**

(51) Int. Cl.³: **C 04 B 15/02, C 04 B 31/20**

(21) Anmeldenummer: **82109846.4**

(22) Anmeldetag: **25.10.82**

(54) Verfahren zum Herstellen von grobkeramischen Kunststeinen.

(30) Priorität: **26.10.81 DE 3142376**

(43) Veröffentlichungstag der Anmeldung:
**04.05.83 Patentblatt 83/18**

(45) Bekanntmachung des Hinweises auf die Patenterteilung:
**19.09.84 Patentblatt 84/38**

(84) Benannte Vertragsstaaten:
**AT BE CH DE FR GB IT LI LU NL SE**

(56) Entgegenhaltungen:
**DE - B - 1 207 255**
**FR - A - 2 193 348**
**US - A - 2 485 742**
**US - A - 3 192 291**
**US - A - 4 158 685**

(73) Patentinhaber: **SICOWA Verfahrenstechnik für Baustoffe GmbH & Co. KG, Handerweg 17, D-5100 Aachen (DE)**

(72) Erfinder: **Glitza, Horst, Ing., Am Hülsberg 8, D-4370 Marl (DE)**
Erfinder: **Engert, Hanns-Jörg, Ing., Handerweg 17, D-5100 Aachen (DE)**
Erfinder· **Schulz, Eckhard, Ing., Lilienstrasse 10, D-4512 Wallenhorst (DE)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

## Beschreibung

Die Erfindung betrifft ein Verfahren zum Herstellen von grobkeramischen Kunststeinen, bei dem eine Rohmischung aus Ton, Wasser, Porosierungsmittel und Festigkeitsbildner hergestellt und die Rohmischung in eine Form gegossen und der in der Form gebildete Rohling entschalt, getrocknet und gebrannt wird.

Grobkeramische Kunststeine wie Ziegel, o. dgl. werden in den Verfahrensschritten — Rohmaterialgewinnung — Rohmateriallagerung — Aufbereitung, d. h. Zerkleinerung und Mischen — Formgebung — Abschneiden, Transport und Setzen der Formlinge — Trocknung — Brennen — hergestellt.

Ein wesentlicher Verfahrensschritt für die Gestaltung und die Qualität der Endprodukte ist die Formgebung, die insbesondere bei der Herstellung von Leichtziegeln durch ein Extrusionsverfahren mit Schneckenpressen erfolgt. Diese Formgebungsart wird üblicherweise auch Strangform- oder Strangpreßverfahren genannt, bei dem der aus der Presse austretende Strang anschließend in die einzelnen Ziegel zertrennt wird. Die Scherbenrohdichte derartig hergestellter Steine ist sehr hoch und liegt bei Werten größer 1,8 kg/dm³, so daß der Wärmedämmwert dieser Produkte für heutige übliche Anforderungen und Bauweisen bei Vollsteinen, aber auch bei Lochsteinen zu gering ist. Um die Wärmedämmung derartiger Steine zu verbessern, werden dem Ton Ausbrennstoffe in Form von Polystyrolkügelchen oder Sägespänen o. dgl. zugesetzt, die während des Brennvorgangs verbrannt werden und dadurch Hohlräume in den Scherben erzeugen.

Jedoch läßt sich hierdurch die Scherbenrohdichte auch nur in den Bereich von ca. 1,4 kg/dm³ erniedrigen. Hierdurch wird zwar die Wärmedämmung, die zusätzlich noch durch beim Strangpressen erzeugte Löcher im Stein erhöht wird, verbessert, jedoch ist sie im Vergleich zu anderen kalk- und zementgebundenen Leichtbaustoffen immer noch relativ niedrig; denn es werden Steinrohdichten von 700 bis 900 kg/m³ nur durch Einbringung eines hohen Lochanteils im Bereich von 40 bis 50% erreicht. Verfahrensbedingt sind bei den verfügbaren Rohstoffen nennenswerte Verbesserungen durch weitere Reduzierung der Scherbenrohdichte einerseits und Erhöhung des Lochanteils andererseits Grenzen gesetzt.

Außerdem bedeutet das Strangpressen einen beträchtlichen Energieaufwand, zumal die verpreßte Rohmischung nur einen geringen Feuchtigkeitsgehalt in der Größenordnung von 10 bis 30 Gew.-% haben darf, damit der austretende Strang formstabil ist.

Ein bekannter und bedeutsamer Nachteil der Strangpreßherstellung besteht ferner darin, daß — offensichtlich bedingt durch den Strangpreßvorgang — eine gewisse Ausrichtung der einzelnen Teilchen der Rohmischung erfolgt, wodurch beträchtliche Eigenschaftsunterschiede in verschiedenen Steinrichtungen hervorgerufen werden.

Um dem Rohton die notwendigen Eigenschaften für alle im Verfahrensablauf erforderlichen Verarbeitungsschritte — insbesondere die Formgebung — zu geben, ist eine aufwendige und anlagenintensive Aufbereitung des Rohstoffvorkommens notwendig, die auch Voraussetzung zur Sicherstellung reproduzierbarer und optimaler Produkteigenschaften und -abmessungen ist.

Um den gesägten Formlingen eine ausreichende Standfestigkeit für das Brennen im Ofen zu geben, ist eine energie- und investitionsaufwendige künstliche Trocknung mit großem Flächenbedarf erforderlich. Der Trocknungsvorgang bewirkt eine Formänderung des Formlings, verbunden mit einer Volumenverringerung. Um die Abweichungen in der Geometrie des Formlings nach dem Trocknen gegenüber der nach der Formgebung möglichst gleichmäßig zu halten, ist der Trocknungsvorgang so zu steuern, daß die Formlingsmasse homogen austrocknet und dadurch die Formänderungen des Formlings räumlich proportional erfolgen.

Außerdem ist es aus Th. Plaul, Technologie der Grobkeramik, Band 6, 2. Auflage, VEB Verlag für Bauwesen, Berlin, bekannt, eine Rohmischung unter Zusatz von Schaum, Wasser und einem Stabilisierungsmittel in Form von Gips oder Tonerdeschmelzzement herzustellen, wobei die Rohmischung dann in Formen gegossen und die gefüllten Formen in einer auf 80° C erwärmten Luftatmosphäre anfangs in der Form getrocknet, dann entschalt und weiterhin getrocknet wird. Die Trocknung bei erhöhter Temperatur erfordert aufgrund des Wärmeübergangs von der Atmosphäre auf die Formen und die darin befindliche Rohmischung längere Standzeiten in der Form im Bereich von mehreren Stunden, womit auch Entmischungserscheinungen auftreten können. Ferner besteht die Gefahr, daß die Porosierung zusammenbricht. Während der Erwärmung ergibt sich ein beträchtlicher Temperaturgradient innerhalb der Rohmischung und außerdem tritt ein Schwund in der Größenordnung von 10% bereits in der Form auf.

Bei der Herstellung von Formkörpern aus Beton ist es grundsätzlich aus der DE-A-1 207 255 bekannt, den Beton in eine Verschalung aus hoher dielektrischer Festigkeit einzubringen und ein elektrisches Hochfrequenzfeld während einer Stunde anzulegen, um eine gleichmäßige Aushärtung zu erzielen und den Aushärtevorgang zu beschleunigen.

Ferner ist es aus der US-A-2 485 742 bekannt, bei der Herstellung von Gasbeton zur Beschleunigung der Gasbildung Hochfrequenzerwärmung einzusetzen.

Aufgabe der Erfindung ist es, ein Verfahren nach dem Oberbegriff des Anspruchs 1 zu schaffen, das es ermöglicht, Steine mit verbesserter Wärmedämmung und homogener Beschaffenheit unter Einsparung von Energiekosten und mit vereinfachter Verfahrensführung bei der Herstellung zu schaffen.

Diese Aufgabe wird dadurch gelöst, daß ein Festigkeitsbildner verwendet wird, der in der Rohmischung bei Umgebungstemperatur mindestens etwa 10 min nach Wasserzugabe im wesentlichen noch keine konsistenzverändernden Reaktionen, aber bei Temperaturen größer 40°C im wesentlichen sofort festigkeitsbildende Reaktionen zeigt, und die in der Form befindliche Rohmischung mittels elektrischer Hochfrequenzerwärmung während 20 s bis 5 min auf eine Temperatur zwischen 40 und 90°C, vorzugsweise zwischen 50 und 70°C, gleichmäßig durchgewärmt wird.

Auf diese Weise werden Steinrohlinge in Einzelsteinfertigung ausgehend von einer gießfähigen Rohmischung unter Anwendung von Porosierungsmaßnahmen hergestellt, wobei für den endgültigen Stein eine sehr niedrige Scherbenrohdichte kleiner 1,2, insbesondere kleiner 1,0 kg/dm³ und vorzugsweise in der Größenordnung von 0,7 kg/dm³ oder weniger erzielt werden. Da wegen des hohen Wassergehaltes zur Herstellung des Rohlings keine Strangpresse verwendet werden kann, wird die gießfähige Rohmischung in eine Form gegossen. Um ein schnelles Entformen der Rohlinge zu ermöglichen, wird der Mischung ein durch Wärme aktivierbarer Festigkeitsbildner zugegeben, der durch eine Erwärmung der Rohmischung in der Form mittels hochfrequenter elektrischer Energie zu festigkeitsbildenden Reaktionen veranlaßt wird, jedoch während des Mischens und in der Zeit bis zum Erwärmen die Konsistenz der Rohmischung praktisch nicht beeinflußt und damit deren Verarbeitbarkeit sicherstellt.

Die Ausgangsstoffe der Rohmischung sind im wesentlichen:

— Ton und/oder Schamotte als Zuschlag
— ggf. Zusatzstoffe für die Optimierung der Verfahrensführung und der Produkteigenschaften
— Wasser
— Zusatzmittel
— Porosierungsmittel
— Festigkeitsbildner

Der Ton kann entweder nach einer Trockenaufbereitung (Trocknen, Mahlen, Absieben auf eine Korngröße kleiner 2 mm) in einen Mischer als Trockenstoff oder nach einer Naßaufbereitung als Ton-Wasser-Suspension, wobei gröbere Tonbrocken zuvor in Wasser aufgeschlämmt und durch ein Rührwerk homogen suspendiert werden, zugegeben werden.

Sofern Schamotte untergemischt wird, steht diese als Trockenstoff zur Verfügung.

Als Zusatzstoffe sollten möglichst nur keramisch-affine Stoffe eingesetzt werden, wie z. B. Flugasche.

Wasser wird je nach der gewählten Aufbereitungsmethode des Tones entweder im Mischer zugegeben oder ist bereits in der Ton-Wasser-Suspension in voller Menge enthalten.

Als Zusatzmittel werden gegebenenfalls zugegeben:

— Verflüssiger, die den Wassergehalt reduzieren,
— Flußmittel, die die Brenneigenschaften verbessern, z. B. Calcium- und/oder Magnesium-Verbindungen,
— Zusätze, die die Ausblüheigenschaften der Endprodukte verringern, beispielsweise Baryt.

Die Porosierung der Rohmischung kann erfolgen durch

— Zugabe von vorgefertigtem Schaum in den Mischer oder durch Zusatz eines Schaumbildners und Erzeugung des Schaums im Mischer, wobei synthetische Schaummittel oder Proteinschäume Anwendung finden können,
— Zugabe von organischen Ausbrennstoffen, wie z. B. Sägemehl oder Polystyrol, die nach dem Brennen Luftporen hinterlassen,
— Zugabe von anorganischen Leichtzuschlägen, wie etwa Blähton, Perlit, die im fertigen Produkt ein festes Korngerüst aufbauen.

Es ist auch denkbar, die Porosierung durch Zugabe von Gasbildnern im Mischer zu erreichen, wobei die Gasentwicklung verbunden mit der Volumenexpansion der Rohmischung während der Formgebung in der Form stattfindet.

Als Festigkeitsbildner kommen ausschließlich nur solche infrage, die durch Wärme im Temperaturbereich größer 40°C zu festigkeitsbildenden Reaktionen angeregt werden. Hierzu eignet sich insbesondere ein Festigkeitsbildner, der aus einer Kombination eines Bindemittels plus Beschleuniger und/oder Verzögerer besteht, wobei die Kombination derart eingestellt ist, daß sie bei einer vorgesehenen Mindesttemperatur größer 40°C im wesentlichen sofort festigkeitsbildende Reaktionen zeigt. Für diesen Einsatz eignen sich beispielsweise durch Beschleuniger und/oder Verzögerer entsprechend eingestellte Zemente wie Portlandzemente sowie Schnellzemente oder Tonerdeschmelzzemente, wobei letztere im Festigkeitsbildner vorzugsweise mindestens teilweise vorhanden sind. Ferner sind auch andere Bindemittel wie Wasserglas einsetzbar, wobei zur Optimierung der Verfahrensführung gegebenenfalls weitere beschleunigende oder verzögernde Zusatzmittel für den Festigkeitsbildner verwendet werden können.

Damit die Rohmischung durch den Festigkeitsbildner nicht in ihrer Konsistenz bis zum Erreichen der Form beeinträchtigt wird und damit gegebenenfalls auch Störungen aufgefangen werden können, werden solche Festigkeitsbildner bevorzugt, die in der Rohmischung bei der Rohmischungstemperatur während des Anmachens nach Wasserzugabe mindestens etwa 20 min und vorzugsweise noch länger im wesentlichen keine konsistenzverändernden Reaktionen zeigen.

Der Verfahrensablauf gliedert sich in die Stufen — Aufbereiten — Dosieren — Mischen — Formgebung — Transportieren — Stapeln — Trocknen — Brennen, wobei die Formgebung sich in die Phasen — Befüllen der Form — Erwärmung der Rohmischung in der Form — Festigkeitsbildung der Rohmischung — Entschalung des Rohlings — gliedert.

Die Erwärmung der Masse in der Form erfolgt durch kapazitive Erwärmung mittels eines elektrischen Hochfrequenzfeldes auf Temperaturen zwischen 40 bis 90°C, vorzugsweise 50 bis 70°C, in Zeiträumen von 20 s bis 5 min, vorzugsweise 30 bis 120 s. Das Hochfrequenzfeld kann beispielsweise mit Frequenzen größer als 600 kHz bei Spannungen größer als 2 kV erzeugt werden, wobei Frequenzen bis zu 30 MHz eingesetzt werden können. Ein hierfür verwendeter Hochfrequenzgenerator kann an entsprechende Kondensatorplatten angeschlossen werden, zwischen denen die Form, die mit Rohmischung gefüllt ist, angeordnet wird. Die Dauer der Festigkeitsbildung in der Form ist abhängig von der Höhe der Festigkeitsbildnerzugabe, die vorzugsweise in einer Menge von 10 bis 20 Gew.-% der festen Einsatzstoffe der Rohmischung erfolgt, sowie von der Zieltemperatur der Hochfrequenzerwärmung. In Abhängigkeit von diesen Parametern kann der gebildete Rohling nach der Erwärmung gegebenenfalls sofort entschalt werden oder man kann noch eine zusätzliche Formstandzeit bis zu etwa 4 min vorsehen, um einen Rohling mit genügender Festigkeit entformen zu können.

Bei Verwendung eines Schaums oder eines Gasbildners als Porosierungsmittel wird die Erwärmung der in der Form befindlichen Rohmischung so schnell vorgenommen, daß die durch die Erwärmung bewirkte Expansion der Rohmischung im wesentlichen beendet ist, bevor die festigkeitsbildenden Reaktionen des Festigkeitsbildners einsetzen. Bei Verwendung eines Gasbildners als Porosierungsmittel ist es zweckmäßig, die Hochfrequenzleistung entsprechend dem Volumen der Rohmischung in der Form, das sich durch die Gasbildung vergrößert, abzugleichen. Bei Al-Pulver als Gasbildner kann im übrigen das hiervon gebildete Aluminiumhydroxid als Beschleuniger für Zement als Bindemittel verwendet werden. Bei Verwendung von Tonerdeschmelzzement kann man dabei zweistufig arbeiten, indem man ausnutzt, daß Tonerdeschmelzzement erst etwa oberhalb von 60°C wesentliche festigkeitsbildende Reaktionen zeigt, um bei einer Temperatur oberhalb von 40°C, aber unterhalb von 60°C die Porosierung vorzunehmen, um dann durch eine weitere Erwärmung auf eine Temperatur über 60°C das gebildete Gerüst durch die festigkeitsbildenden Reaktionen des Tonerdeschmelzzements zu konservieren.

Im Gegensatz zur traditionellen Ziegelherstellung sind die Rohlinge durch die Zugabe und die Reaktion des Festigkeitsbildners trocknungsunempfindlich und weisen insbesondere kein nennenswertes Trocknungsschwinden auf.

Anstelle von Einzelformen kann man auch eine an zwei Endseiten offene Form verwenden, in die die Rohmischung an einer Seite kontinuierlich eingegossen wird. Die Rohmischung wird dann im Durchlauf mittels Hochfrequenz erwärmt, indem die Form zwischen entsprechenden Kondensatorplatten angeordnet ist, und der aus der Form austretende Strang wird in einzelne Blöcke oder Steinrohlinge zerteilt. Hierbei kann der gegossene Strang nach der Erwärmung in der Form bis zur Erzielung der gewünschten Rohlingsfestigkeit weitergeführt werden.

Vorzugsweise werden Schäume mit einer Schaumrohdichte von etwa 40 bis 100 g/l, vorzugsweise 60 bis 80 g/l, verwendet. Da die Poren in dem gebildeten Stein sehr klein (kaum sichtbar) und gleichmäßig verteilt sind, kann der gebrannte Stein auch gemahlen und als Leichtzuschlag für grobkeramische Produkte oder andere Baustoffe verwendet werden.

Die Rohmischung kann volumetrisch dosiert in die Form gefüllt, die dosierte Menge gravimetrisch überprüft und bei den folgenden Chargen die Dichte der Rohmischung durch Änderung des Zusatzes von Wasser und/oder Porosierungsmittel entsprechend der gravimetrischen Messung nachgeregelt werden.

Abgesehen davon, daß ein Strangpressen entfällt, braucht wegen der geringeren Rohdichte auch nur eine geringere Masse gebrannt zu werden, so daß der Energieaufwand verringert wird. Das Brennen erfolgt in üblicher Weise.

Die Porenstruktur des gebildeten Produkts, das als Mauerstein oder auch als plattenförmiges Element ausgeführt sein kann, verbessert die Wärmedämmeigenschaften beträchtlich. Außerdem ist es möglich, den Stein mit einem Lochmuster zu versehen, wobei die Löcher jedoch auch vorteilhaft als Sacklöcher ausgebildet sein können. Dies kann für die Wärmedämmung günstiger sein, da die Löcher beim Mauern von Mörtel freigehalten werden. Beim Strangpressen können derartige Lochmuster jedoch nur durchgehend und nicht als Sacklöcher ausgebildet werden. Es lassen sich auch Feuerfeststeine herstellen, wobei es sehr vorteilhaft ist, daß die Steine durch Einzelsteinherstellung entsprechend den Anforderungen geformt werden können, indem entsprechende Formen eingesetzt werden. Auch läßt sich ein zweischichtiger Stein, beispielsweise mit einer Witterungsschutzschicht herstellen. Insbesondere eignet sich das Verfahren zur Herstellung von Plansteinen, d. h. Steinen mit minimalen Toleranzen in den Abmessungen.

Durch das schnelle Erwärmen und Verfestigen des Rohlings werden Entmischungserscheinungen verhindert, so daß sich Steine mit gleichmäßiger Dichteverteilung ergeben.

### Beispiel 1

Aus 700 Gew.-Teilen Ton, feinzerkleinert auf eine Korngröße kleiner 1 mm, 300 Gew.-Teilen Zusatzstoff, der grobkörniger als der Ton ist, 350 Gew.-Teilen Schnellzement, 800 Gew.-Teilen Wasser, 40 Gew.-Teilen Schaum (60 g/l Rohdichte) wird eine Rohmischung durch Mischen in einem Mischer hergestellt, dann in eine Form 40 cm · 20 cm · 20 cm) gefüllt und während 50 s auf 70°C mittels Hochfrequenz (27,2 MHz) mit Hilfe eines 30 kW-Generators erhitzt. Danach kann der fertige Steinrohling sofort ausgeformt und zum Trocknen abtransportiert werden. Nach dem Trocknen wird der Stein in üblicher Weise gebrannt. Es ergibt sich eine Scherbenrohdichte von 0,7 kg/dm³ bei einem Schwund in der Größenordnung von Promille.

Als Zusatzstoff kann Schamotte, Ziegelsplitt oder Flugasche eingesetzt werden.

### Beispiel 2

Es wird eine Rohmischung aus 840 Gew.-Teilen Ton (gemäß Beispiel 1), 300 Gew.-Teilen Portlandzement plus Beschleuniger (Aluminiumhydroxid), 560 Gew.-Teilen Wasser, 0,4 Gew.-Teilen Al-Pulver in 30 Gew.-Teilen Wasser suspendiert und einem Zusatz an 37,5%iger NaOH hergestellt und wie in Beispiel 1 weiterverarbeitet. Hierbei erfolgt die Erwärmung während 55 s auf 62°C. Die Form wird zur Hälfte gefüllt. Nach weiteren 4 min ist die Rohmischung gebläht und weist eine genügende Festigkeit zum Entschalen auf. Nach Trocknen und Brennen ergibt sich eine Scherbenrohdichte von 1,0 kg/dm³.

### Beispiel 3

Es wird eine Rohmischung aus 840 Gew.-Teilen Ton in 600 Gew.-Teilen Wasser suspendiert und 200 Gew.-Teilen Tonerdeschmelzzement sowie 26 Gew.-Teilen Schaum (Rohdichte 0,07 kg/dm³) hergestellt und in der Form während 25 s auf 65°C erhitzt, anschließend entformt, getrocknet und gebrannt. Es ergibt sich eine Scherbenrohdichte von 0,8 kg/dm³.

### Patentansprüche

1. Verfahren zur Herstellung von grobkeramischen Kunststeinen, bei dem eine Rohmischung aus Ton, Wasser, Porosierungsmittel und Festigkeitsbildner hergestellt und die Rohmischung in eine Form gegossen und der in der Form gebildete Rohling entschalt, getrocknet und gebrannt wird, dadurch gekennzeichnet, daß ein Festigkeitsbildner verwendet wird, der in der Rohmischung bei Umgebungstemperatur mindestens etwa 10 min nach Wasserzugabe im wesentlichen noch keine konsistenzverändernden Reaktionen, aber bei Temperaturen größer 40°C im wesentlichen sofort festigkeitsbildende Reaktionen zeigt, und die in der Form befindliche Rohmischung mittels elektrischer Hochfrequenzerwärmung während 20 s bis 5 min auf eine Temperatur zwischen 40 und 90°C, vorzugsweise zwischen 50 bis 70°C, gleichmäßig durchgewärmt wird.

2. Verfahren nach Anspruch 1, dadurch gekennzeichnet, daß ein Festigkeitsbildner verwendet wird, der aus einer Kombination aus einem Bindemittel plus Beschleuniger und/oder Verzögerer besteht, wobei die Kombination derart eingestellt ist, daß sie bei einer vorgesehenen Mindesttemperatur größer 40°C im wesentlichen sofort festigkeitsbildende Reaktionen zeigt.

3. Verfahren nach Anspruch 1 oder 2, dadurch gekennzeichnet, daß als Bindemittel Zement verwendet wird.

4. Verfahren nach einem der Ansprüche 1 bis 3, dadurch gekennzeichnet, daß als Bindemittel zumindestens teilweise Schnellzement verwendet wird.

5. Verfahren nach einem der Ansprüche 1 bis 4, dadurch gekennzeichnet, daß als Bindemittel zumindestens teilweise Tonerdeschmelzzement verwendet wird.

6. Verfahren nach einem der Ansprüche 1 bis 5, dadurch gekennzeichnet, daß bei Verwendung eines Schaums oder eines Gasbildners als Porosierungsmittel die Erwärmung der in der Form befindlichen Rohmischung so schnell vorgenommen wird, daß die durch die Erwärmung bewirkte Expansion der Rohmischung im wesentlichen beendet ist, bevor die festigkeitsbildenden Reaktionen des Festigkeitsbildners einsetzen.

7. Verfahren nach einem der Ansprüche 1 bis 6, dadurch gekennzeichnet, daß der Festigkeitsbildner in einer Menge von etwa 10 bis 20 Gew.-% der festen Einsatzstoffe der Rohmischung verwendet wird.

8. Verfahren nach Anspruch 6, dadurch gekennzeichnet, daß bei Verwendung eines Gasbildners als Porosierungsmittel die Hochfrequenzleistung entsprechend dem Volumen der Rohmischung in der Form abgeglichen wird.

9. Verfahren nach einem der Ansprüche 1 bis 8, dadurch gekennzeichnet, daß das Porosierungsmittel in einer solchen Menge zugegeben wird, daß sich eine Scherbenrohdichte ergibt, die kleiner als 1,2, insbesondere 1,0 und vorzugsweise 0,7 kg/dm³ ist.

10. Verfahren nach einem der Ansprüche 1 bis 9, dadurch gekennzeichnet, daß der in der Form gebildete Rohling nach der Erwärmung 0 bis 4 min bis zum Entschalen in der Form verbleibt.

11. Verfahren nach einem der Ansprüche 1 bis 10, dadurch gekennzeichnet, daß die Rohmischung als Strang in eine an zwei Endseiten offene Form kontinuierlich gegossen, in der Form im Durchlauf erwärmt und beim Austreten aus der Form in einzelne Blöcke zerteilt wird.

12. Verfahren nach Anspruch 11, dadurch gekennzeichnet, daß der gegossene Strang nach der Erwärmung in der Form bis zur Erzielung der gewünschten Rohlingsfestigkeit weitergeführt wird.

13. Verfahren nach einem der Ansprüche 1 bis 12, dadurch gekennzeichnet, daß eine Rohmischung verwendet wird, der ein Schaum mit einer Schaumrohdichte von etwa 40 bis 100 g/l, vorzugsweise 60 bis 80 g/l, zugesetzt ist.

14. Verfahren nach einem der Ansprüche 1 bis 13, dadurch gekennzeichnet, daß die Rohmischung volumetrisch dosiert in die Form gefüllt, die dosierte Menge gravimetrisch überprüft und bei den folgenden Chargen die Dichte der Rohmischung durch Änderung des Zusatzes von Wasser und/oder Porosierungsmittel entsprechend der gravimetrischen Messung nachgeregelt wird.

### Claims

1. Method of producing coarse ceramic artificial stone whereby a raw mix of clay, water, porosity-producing agent and setting agent is produced and the raw mix poured into a mould and the casting produced in the mould is removed, dried and fired, characterized in that a setting agent is used which at ambient temperature substantially still does not show any consistency changing reactions in the raw mix at least some 10 minutes after the addition of water, but at temperatures in excess of 40°C shows substantially immediate setting reactions, and in that the raw mix present in the mould is evenly heated through by electric high frequency heating for 20 s to 5 min to a temperature between 40 and 90°C, preferably between 50 to 70°C.

2. Method according to claim 1, characterized in that a setting agent is used which consists of a combination of a binder plus accelerator and/or retarder, the combination being so adjusted that at an anticipated minimum temperature greater than 40°C it shows substantially immediate setting reactions.

3. Method according to claim 1 or 2, characterized in that cement is used as the binding agent.

4. Method according to one of claims 1 to 3, characterized in that quick-setting cement is used at least partly as the binding agent.

5. Method according to one of claims 1 to 4, characterized in that aluminous cement is used at least partly as the binding agent.

6. Method according to one of claims 1 to 5, characterized in that, on using a foam or a gas-producer as porosity-producing agent, the heating of the raw mix present in the mould is effected so quickly that the expansion of the raw mix produced by heating is substantially ended before the setting reactions of the setting agent commence.

7. Method according to one of claims 1 to 6, characterized in that the setting agent is used in an amount of some 10 to 20% by weight of the solid materials of the raw mix.

8. Method according to claim 6, characterized in that on using a gas-producer as porosity-producing agent the high frequency output is adjusted in accordance with the volume of the raw mix in the mould.

9. Method according to one of claims 1 to 8, characterized in that the porosity-producing agent is added in such an amount that a body bulk density is produced which is smaller than 1.2, particularly 1.0 and preferably 0.7 kg/dm$^3$.

10. Method according to one of claims 1 to 9, characterized in that the casting produced in the mould remains in the mould after heating for 0 to 4 min before removal.

11. Method according to one of claims 1 to 10, characterized in that the raw mix is poured in a continuous flow into a mould open at both ends, is heated in the mould as it passes through and, on coming out of the mould, is divided into individual blocks.

12. Method according to claim 11, characterized in that the poured material is passed further after the heating in the mould until the desired setting of the casting has been achieved.

13. Method according to one of claims 1 to 12, characterized in that a raw mix is used to which a foam with a foam bulk density of some 40 to 100 g/l, preferably 60 to 80 g/l, is added.

14. Method according to one of claims 1 to 13, characterized in that the raw mix is metered volumetrically into the mould, the metered amount is checked gravimetrically and in that, for the following batches, the density of the raw mix is readjusted by modifying the addition of water and/or porosity-producing agent in accordance with the gravimetric measurement.

### Revendications

1. Procédé de préparation d'articles en céramique grossière, dans lequel on prépare un mélange brut d'argile, d'eau, d'un agent porogène et d'un agent de développement de la résistance, on verse le mélange brut dans un moule et on démoule la pièce brute formée dans le moule, on la sèche et on la calcine, caractérisé en ce qu'on utilise un agent de développement de la résistance qui ne présente dans le mélange brut, à la température ambiante, pendant au moins environ 10 min après l'addition d'eau, pratiquement encore aucune réaction modifiant la consistance, mais qui présente à des températures supérieures à 40°C, pratiquement immédiatement, des réactions développant la résistance, et en ce qu'on chauffe régulièrement dans la masse le mélange brut se trouvant dans le moule au moyen d'un chauffage électrique à haute fréquence pendant 20 s à 5 min à une température entre 40 et 80°C, de préférence entre 50 et 70°C.

2. Procédé suivant la revendication 1, caractérisé en ce qu'on utilise un agent de développement de la résistance qui se compose d'une combinaison d'un liant plus un accélérateur et/ou un retardateur, la combinaison étant ajustée de telle manière qu'elle présente pratiquement immédiatement, à une température minimale prévue supérieure à 40°C, des réactions développant la résistance.

3. Procédé suivant la revendication 1 ou la revendication 2, caractérisé en ce qu'on utilise comme liant du ciment.

4. Procédé suivant l'une quelconque des revendications 1 à 3, caractérisé en ce qu'on utilise comme liant au moins partiellement du ciment prompt.

5. Procédé suivant l'une quelconque des revendications 1 à 4, caractérisé en ce qu'on utilise comme liant au moins partiellement du ciment alumineux fondu.

6. Procédé suivant l'une quelconque des revendications 1 à 5, caractérisé en ce que dans le cas de l'utilisation d'une mousse ou d'un agent formant un gaz comme agent porogène, le chauffage du mélange brut se trouvant dans le moule est effectué si rapidement que l'expansion du mélange brut provoquée par le chauffage est pratiquement terminée avant que les réactions développant la résistance de l'agent de développement de la résistance ne commencent.

7. Procédé suivant l'une quelconque des revendications 1 à 6, caractérisé en ce que l'agent de développement de la résistance est utilisé dans une quantité d'environ 10 à 20% en poids des constituants solides du mélange brut.

8. Procédé suivant la revendication 6, caractérisé en ce que dans le cas de l'utilisation d'un agent formateur de gaz comme agent porogène, la puissance haute fréquence est équilibrée en fonction du volume du mélange brut dans le moule.

9. Procédé suivant l'une quelconque des revendications 1 à 8, caractérisé en ce que l'agent porogène est ajouté dans une quantité telle que l'on obtient une densité brute de la pâte qui est inférieure à 1,2, en particulier à 1,0 et de préférence à 0,7 kg/dm³.

10. Procédé suivant l'une des revendications 1 à 9, caractérisé en ce que la pièce brute formée dans le moule reste après l'échauffement 0 à 4 mn dans le moule jusqu'au démoulage.

11. Procédé suivant l'une des revendications 1 à 10, caractérisé en ce que le mélange brut est versé en continu sous forme de boudin, et chauffé dans le moule en continu et est découpé en blocs isolés lors de la sortie du moule.

12. Procédé suivant la revendication 11, caractérisé en ce qu'après le chauffage, on fait avancer dans le moule le boudin versé jusqu'à obtention de la résistance désirée de la pièce brute.

13. Procédé suivant l'une des revendications 1 à 12, caractérisé en ce qu'on utilise un mélange brut auquel est ajoutée une mousse avec une densité de mousse brute d'environ 40 à 100 g/l, de préférence de 60 à 80 g/l.

14. Procédé suivant l'une des revendications 1 à 13, caractérisé en ce que le mélange brut est introduit dans le moule dosé volumétriquement, en ce que la quantité dosée est contrôlée gravimétriquement et en ce que pour les charges suivantes, la densité du mélange brut est ajustée par modification de l'addition d'eau et/ou d'agent porogène conformément à la mesure gravimétrique.